# EUROPÄISCHE PATENTSCHRIFT

(11) **EP 0 715 141 B1**
(45) Veröffentlichungstag und Bekanntmachung des Hinweises auf die Patenterteilung: **29.01.2003**
(21) Anmeldenummer: 95118196.5
(22) Anmeldetag: 18.11.1995
(51) Int. Cl.: F27B 7/38, F27B 7/00, C04B 7/47, C04B 7/43

(54) **Anlage zur thermischen Behandlung von mehlförmigen Rohmaterialien**
Installation for the heat treatment of fines
Installation pour le traitement thermique de farines

(30) Priorität: 01.12.1994 DE 4442703
(43) Veröffentlichungstag der Anmeldung: 05.06.1996
(73) Patentinhaber: KHD Humboldt Wedag AG, 51105 Köln (DE)
(72) Erfinder: Bauer, Claus, D-51147 Köln (DE)

(56) Entgegenhaltungen:
- FR-A- 2 310 980
- FR-A- 2 365 533
- GB-A- 668 671
- US-A- 3 831 291

## Beschreibung

Die Erfindung betrifft eine Anlage zur thermischen Behandlung von mehlförmigen Rohmaterialien, insbesondere zur Herstellung von Zementklinker aus Rohmehl, bestehend aus einem Drehrohrofen und wenigstens einem vom Abgas des Drehrohrofens durchströmten Vorwärmer, mit einer dem Drehrohrofen vorgeschalteten und mit Heißluft bzw. Tertiärluft aus dem Klinkerkühler und Zusatzbrennstoff versorgten Calcinierstufe und mit einem dem Drehrohrofen nachgeschalteten Klinker-Rostkühler sowie mit einem zwischen dem Drehofenauslaufende und dem Rekuperationsbereich des Rostkühlers angeordneten Ofenauslaufgehäus, aus dem Kühlerheißluft einesteils als Sekundärluft in die Sinterzone des Drehrohrofens und anderenteils als Tertiärluft über eine Tertiärluftleitung zur Calcinierstufe geführt ist.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflußseitig gesehen eine Calcinierstufe vorzuschalten, die mit einer Zweitfeuerung (neben der Feuerung im Drehrohrofen) ausgestattet ist. Der im Drehrohrofen gebrannte Zementklinker wird im glühend heißen Zustand über ein das Drehrohrofenende umfassendes stationäres Ofenauslaufgehäuse nach unten auf einen Rostkühler abgeworfen, der sich in Längsrichtung des Drehrohrofens gesehen an diesen anschließt (Broschüre Nr. 7-330 der KHD Humboldt Wedag AG, Seiten 4 und 5), oder der unterhalb des Drehrohrofens mit seiner Transportrichtung rückläufig zu diesem installiert ist. Im Rostkühler wird der z. B. 1000 °C heiße Zementklinker mittels Kühlluft abgekühlt. Die im Ofenauslaufgehäuse aufgefangene Kühlerheißluft wird zweifach für den Zementklinkerbrennprozeß ausgenutzt, nämlich einesteils als Sekundärluft für die Drehofenfeuerung und anderenteils als Tertiärluft für die Zweitfeuerung in der Calcinierstufe. Bedingt durch die bisher bekannte geometrische Anordnung des Rostkühlers zum Drehrohrofen war es immer so, daß die Verbrennungsluft zum Drehrohrofen (Sekundärluft) heißer ist, nämlich ca. um 50 bis 100 °C heißer als die Verbrennungsluft zur Calcinierstufe (Tertiärluft).

Aus der GB-A-668,671 ist eine Anlage zur raschen Kühlung von Zementklinker bekannt, der aus einem Drehrohrofen ausgetragen wird, dem materialflußseitig aber keine mit Zweitfeuerung ausgestattete und mit Tertiärluft aus dem Klinkerkühler versorgte Calcinierstufe vorgeschaltet ist. Vielmehr besteht der bekannte Klinkerkühler aus einem schräg zur Horizontalen geneigten Rollenrost mit zahlreichen beabstandeten, über einen Kettenantrieb angetriebenen und von Kühlwasser durchströmten hohlzylindrischen Rollen. Die heiße Kühlerabfluft, die das auf den Rollen lagernde Klinkermaterial durchströmt hat, kann je nach Stellung einer Ventilklappe über eine Leitung dem Drehofenbrenner als erhitzte Primärluft und/oder über eine andere Leitung der Ofengutauslaufkammer und von dort dem Drehrohrofen als Sekundärluft zugeleitet werden. Eine vom Klinkerkühler zu einem dem Drehrohrofen vorgeschalteten Calcinator führende Tertiärluftleitung ist nicht vorhanden. Damit ist auch das der Erfindung zugrundeliegende Problem der miteinander verquickten Termperaturhöhen von Sekundärluft einerseits und Tertiärluft andererseits einer Anlage zur Herstellung von Zementklinker nicht angesprochen.

Aus der FR-A-2 310 980 Figuren 1 und 2 ist eine Anlage zur Herstellung von Zementklinker bekannt, mit einem Drehofen, dem ein Calcinator vorgeschaltet und ein Klinkerkühler nachgeschaltet ist, in den außer Kühlluft noch ein in einem Luftstrom suspendierter kalter Rohmehlteilstrom zu dessen partiellen Calcination im Klinkerkühler eingeleitet wird. Von der Oberseite des Ofenauslaufgehäuses, welches das Drehofenende mit dem Klinkerkühler verbindet, geht eine Kühlerabluftleitung zum Transport der mit dem partiell calcinierten Rohmehlteilstrom beladenen heißen Kühlerabluft zum Calcinator ab. Dabei wird kein Einfluß ausgeübt auf die Temperaturhöhe des Kühlerabluftteilstroms, der als Sekundärluft in den Drehofen einströmt, und des Kühlerablufteilstroms, der als sogenannte Tertiärluft zum Calcinator strömt, so daß davon auszugehen ist, daß die aus dem Ofenauslaufgehäuse abgezogene Sekundärluft heißer, keinesfalls kälter ist als die abgezogene Tertiärluft.

In den letzten Jahren sind erhebliche Anstrengungen unternommen worden, die Wärmerückgewinnung (Rekuperation) in den den Drehrohröfen nachgeschalteten Rostkühlern durch Verbesserung von deren Wirkungsgrad zu steigern. Dies hat zu noch höheren Temperaturen der vom Rostkühler über das Ofenauslaufgehäuse in den Drehrohrofen einströmenden heißen Sekundärluft geführt. Es gibt aber mehrere Gründe für den Wunsch, eine zu heiße Sekundärlufttemperatur, die bei modernen Rostkühlern heute bei z. B. 1100 °C liegen kann (früher bei ca. 800 °C), absenken zu können bzw. die Sekundärluft in Richtung ihrer Temperaturabsenkung beeinflussen zu können:
- Bei zu hohen Sekundärlufttemperaturen geraten die hitzebeständigen Werkstoffe des Drehofenauslaufes sowie des Ofenauslaufgehäuses an die Grenze ihrer Beanspruchbarkeit. Das Ausweichen auf höher zu beanspruchende Werkstoffe würde die Anschaffungskosten drastisch erhöhen. Aus diesen Gründen ist eine reduzierte Temperaturbelastung der feuerfesten Materialien des Ofenauslaufgehäuses sowie der metallischen Drehofenauslaufsegmente sowie der Brennerlanze im Bereich des Drehofenauslaufes erwünscht.
- Zu hohe Sekundärlufttemperaturen erschweren eine Vorkühlung des glühend heißen Zementklinkers im Drehofenauslaufbereich und fördern die Schmelzphasenbildung und die Ansatzbildung im Drehofenauslaufbereich.
- Zu hohe Sekundärlufttemperaturen und damit zu hohe Flammentemperaturen des Drehofenbrenners fördern die unerwünschte NOₓ-Bildung im Drehofenabgas.

Der Erfindung liegt daher die Aufgabe zugrunde, bei Zementklinkerherstellungsanlagen mit Drehofenfeuerung und mit Zweitfeuerung und mit Rostkühler hohen Rekuperationsgrades zu ermöglichen, daß die Temperatur der vom Rekuperationsbereich des Rostkühlers über das Ofenauslaufgehäuse in den Drehrohrofen einströmenden Sekundärluft im Sinne einer Temperaturabsenkung beeinflußt werden kann, ohne die zu heiße Sekundärluft mit Frischluft bzw. Falschluft abkühlen zu müssen, wodurch die angestrebte möglichst hohe Wärmerückgewinnung wieder zunichte gemacht werden würde.

Diese Aufgabe wird erfindungsgemäß mit den Maßnahmen des Kennzeichnungsteils des Anspruchs 1 gelöst. Vorteilhafte Ausgestaltungen sind in den Unteransprüchen angegeben.

Bei der erfindungsgemäßen Zementklinkerherstellungsanlage mit Drehofenfeuerung, Zweitfeuerung in der Calcinierstufe und mit Rostkühler wird eine Steuerung der vom Rekuperationsbereich des Rostkühlers kommenden und durch das Ofenauslaufgehäuse in den Drehrohrofen einströmenden Sekundärluftmenge bezüglich ihrer Temperaturhöhe ermöglicht, indem die Entnahme der Tertiärluft aus dem Ofenauslaufgehäuse (für die Zweitfeuerung) so gestaltet wird, daß sich eine Auswirkung auf die Sekundärlufttemperatur ergibt. Erfindungsgemäß werden nämlich die Sekundärluft und die Tertiärluft bezüglich ihrer Temperaturhöhe im Vergleich zu den bisher bekannten Konstruktionen und Verfahren vertauscht. Dazu ist es erforderlich, den Klinker-Rostkühler nicht mehr fortlaufend zur Drehofenachse aufzustellen, sondern mit seiner Klinker-Transportrichtung quer zur Drehofenlängsachse so anzuordnen, daß die Rostkühler-Transportrichtung unter einem Winkel α von ca. 70 ° bis 150 ° zur Drehofenachse verläuft. Dies hat Strömungsmuster der Rekuperationsluft im Ofenauslaufgehäuse zur Folge, und wenn dann die Entnahme der Kühlerheißluft als Verbrennungsluft für die Zweitfeuerung (Tertiärluft) an derjenigen Seitenhälfte des Ofenauslaufgehäuses installiert ist, in der sich der Beginn des Rekuperationsbereiches der Rostfläche des Rostkühlers befindet, dann bleibt für den Drehrohrofen eine Sekundärluft übrig, die gleich warm oder kälter ist als die Tertiärluft, d. h. keinesfalls heißer als die Tertiärluft. Mit anderen Worten: Am Beginn des Rekuperationsbereiches der Rostfläche des quer gestellten Rostkühlers befindet sich auch die größte Schütthöhe des aus dem Drehofenauslauf glühend heiß auf den Rost fallenden Zementklinkers, d. h. in dieser Zone wird die heißeste Kühlerheißluft erfindungsgemäß als Tertiärluft abgezogen, so daß als Sekundärluft für den Drehrohrofen nur die kühlere Teilstrommenge der Kühlerheißluft verbleibt, die ein Klinkerbett durchströmt hat, welches auf dem beginnenden Rostabschnitt bereits eine Abkühlung erfahren hat, so daß die Sekundärluft kühler ist als die Tertiärluft. Mit der auf diese erfindungsgemäße Weise gewonnenen kühleren Sekundärluft lassen sich die Nachteile vermeiden, die in der Beschreibungseinleitung zum Stand der Technik moderner Rostkühler angegeben worden sind.

Die Öffnung zur Entnahme der Kühlerheißluft als Verbrennungsluft für die Calcinierstufe (Tertiärluft für die Zweitfeuerung) ist in der Seitenwandung und/oder Deckenwandung des Ofenauslaufgehäuses erfindungsgemäß an einer solchen Stelle angeordnet, die der je nach Drehrichtung des Drehrohrofens sich darin ausbildenden Gutmaterialniere mit der damit verbundenen Gutabwurfcharakteristik benachbart ist. Auch durch Wahl der Drehrichtung des Drehrohrofens kann die Temperatur der aus dem Ofenauslaufgehäuse abzuziehenden Sekundärluft einerseits und Tertiärluft andererseits beeinflußt werden.

Die Erfindung und deren weitere Merkmale und Vorteile werden anhand des in den Figuren schematisch dargestellten Ausführungsbeispieles näher erläutert.

Es zeigt:
- Fig. 1:: die Ansicht auf das zwischen Zementklinker-Drehrohrofen und Klinker-Rostkühler angeordnete Ofenauslaufgehäuse in Richtung des Pfeiles I der Fig. 2, mit Einblick in das Innere des Drehofenauslaufgehäuses, und
- Fig. 2:: einen Horizontalschnitt durch das Drehofenauslaufgehäuse der Fig. 1 mit Draufsicht auf die Rostfläche des Rostkühlers.

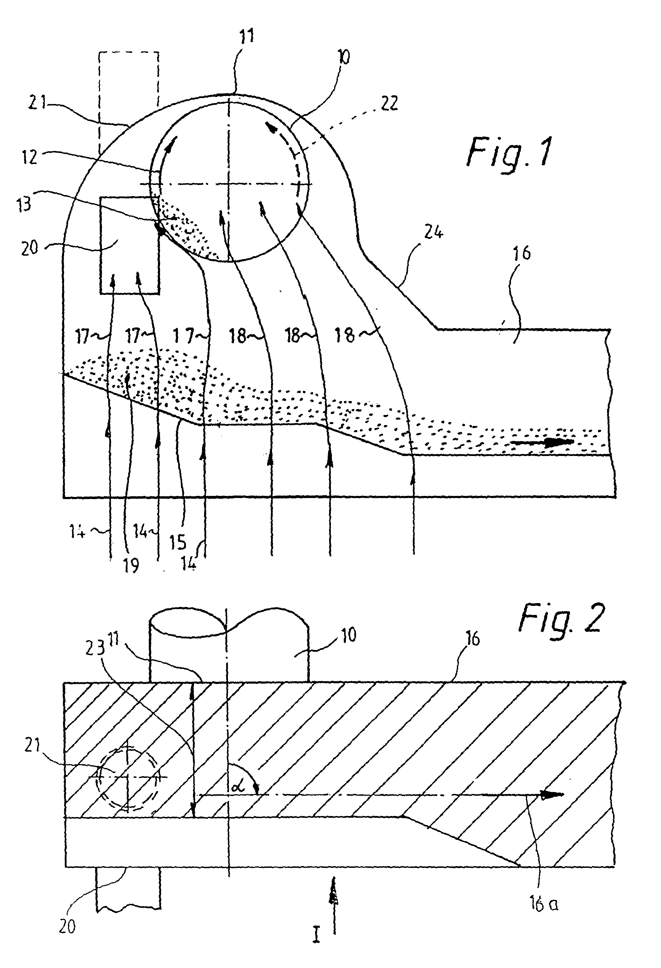

Nach den Figuren ist das Auslaufende des Drehrohrofens (10) einer Zementklinkerherstellungsanlage von einem stationären Ofenauslaufgehäuse (11) umfaßt. Der Drehrohrofen (10) dreht sich in Drehrichtung (12), so daß sich im Drehofen die Gutmaterialniere (13) ausbildet. Aus dieser Gutmaterialniere (13) wird glühend heißer Zementklinker auf den Beginn der von Kühlluft (14) durchströmten Rostfläche (15) eines Rostkühlers (16) abgeworfen, dessen Klinker-Transportrichtung (16a) quer zur Drehofenlängsachse so angeordnet ist, daß die Rostkühler-Transportrichtung unter einem Winkel α von 70 ° bis 150 ° zur Drehofenachse verläuft. Im Ausführungsbeispiel der Fig. 2 beträgt α = 90°. Die Strömungslinien der im Rekuperationsbereich des Klinkerkühlers gewonnenen Kühlerheißluft sind in Fig. 1 als Tertiärluft (17) einerseits und als Sekundärluft (18) andererseits angezeigt.

Deutlich ist zu sehen, daß die Entnahme der Tertiärluft (17) an derjenigen Seitenhälfte des Ofenauslaufgehäuses (11) installiert ist, in der sich der Beginn des Rekuperationsbereiches der Rostfläche (15) des Rostkühlers (16) befindet. Dort befindet sich auch die größte Schütthöhe (19) des aus dem Drehofenauslauf auf den Kühlrost fallenden glühend heißen Zementklinkers, d. h. dort wird die heißeste Kühlerheißluft als Tertiärluft (17) abgezogen, so daß als in den Drehrohrofen (10) einströmende Sekundärluft (18) nur die kühlere Teilstrommenge der im Rekuperationsbereich des Klinkerkühlers gewonnenen Kühlerheißluft verbleibt. Die Öffnung (20) zur Entnahme der Tertiärluft (17) über eine zur Zweitbrennstufe führenden Tertiärluftleitung ist in der Seitenwandung des Ofenauslaufgehäuses (11) an einer solchen Stelle angeordnet, die der je nach Drehrichtung des Drehrohrofens (10) sich darin ausbildenden Gutmaterialniere (13) benachbart ist. Zusätzlich dazu oder auch alternativ dazu besteht auch die Möglichkeit, zur Entnahme der Tertiärluft eine Öffnung (21) in der Deckenwandung des Ofenauslaufgehäuses (11) anzuordnen.

Die Steuerung der Temperaturhöhe der zur Drehofenfeuerung strömenden Sekundärluft (18) kann erfindungsgemäß noch dadurch beeinflußt werden, daß nach einem weiteren Merkmal der Erfindung der erste Kühlrost-Längsabschnitt (15) des Rostkühlers, mit dem dessen Rekuperationsbereich beginnt, zur Horizontalen neigungsverstellbar ausgebildet ist. Durch die Neigungsverstellung ändert sich die Rostbelegung mit Klinker sowie die Verweilzeit des Klinkers im ersten Kühlerbereich. Damit wird auch die Wärmeübertragung vom heißen Klinker an die Kühlluft beeinflußt, die dann entweder zum Drehrohrofen (10) [als Sekundärluft (18)] oder zur Zweitfeuerung der Calcinierstufe [als Tertiärluft (17)] strömt.

Es besteht auch die Möglichkeit, die Drehrichtung des Drehrohrofens (10) variabel zu machen [Drehrichtung (22) statt Drehrichtung (12)] und damit die Abwurfcharakteristik des Klinkers (13) aus dem Ofen auf den Kühlrost zu beeinflussen. Auch hiermit wird die Lufttemperatur in den Kühlersektionen des ersten Kühlerbereiches beeinflußt.

In Fig. 2 ist zu erkennen, daß im Ofenauslaufgehäuse (11) die Breite (23) des Kühlrostes im Abwurfbereich des Klinkers um ca. ¹/₃ bis ½ kleiner ist als an den übrigen Längsabschnitten des Rostkühlers (16).

Schließlich ist aus Fig. 1 noch erkennbar, daß das Ofenauslaufgehäuse (11) am Übergang (24) von dessen Abdeckung zur Deckenwandung des quer zum Drehofen (10) angeordneten Rostkühlergehäuses (16) so gestaltet bzw. so erweitert ist, daß es dort nicht zu einer Erhöhung der Gasgeschwindigkeit an diesem Gehäuseübergang (24) kommt, wodurch die Entnahme der Tertiärluft (17) durch die Entnahmeöffnung (20 bzw. 21) behindert werden könnte.

## Patentansprüche

1. Anlage zur thermischen Behandlung von mehlförmigen Rohmaterialien, insbesondere zur Herstellung von Zementklinker aus Rohmehl, bestehend aus einem Drehrohrofen (10) und wenigstens einem vom Abgas des Drehrohrofens durchströmten Vorwärmer, mit einer dem Drehrohrofen vorgeschalteten und mit Heißluft bzw. Tertiärluft aus dem Klinkerkühler (16) und Zusatzbrennstoff versorgten Calcinierstufe und mit einem dem Drehrohrofen (10) nachgeschalteten Klinker-Rostkühler (16) sowie mit einem zwischen dem Drehofenauslaufende und dem Rekuperationsbereich des Rostkühlers angeordneten Ofenauslaufgehäuse (11), aus dem Kühlerheißluft einesteils als Sekundärluft in die Sinterzone des Drehrohrofens und anderenteils als Tertiärluft über eine Tertiärluftleitung zur Calcinierstufe geführt ist,
**gekennzeichnet durch** die Kombination folgender Merkmale:
- der Rostkühler (16) ist mit seiner Klinker-Transportrichtung (16a) quer zur Drehofenlängsachse so angeordnet, daß die Rostkühler-Transportrichtung unter einem Winkel α von 70 ° bis 150 ° zur Drehofenachse verläuft;
- die Entnahmeöffnung (20 bzw. 21) der Kühlerheißluft als Verbrennungsluft für die Calcinierstufe [Tertiärluft (17)] ist in der Seitenwandung und/oder Deckenwandung des Ofenauslaufgehäuses (11) an derjenigen Seitenhälfte dieses Ofenauslaufgehäuses (11) an einer solchen Stelle angeordnet, die der je nach Drehrichtung des Drehrohrofens (10) sich darin ausbildenden Gutmaterialniere (13) benachbart ist und an der sich der Beginn des Rekuperationsbereichs der Rostfläche (15) des Rostkühlers (16) befindet.

2. Anlage nach Anspruch 1,
**dadurch gekennzeichnet, daß** der erste Kühlrost-Längsabschnitt (15) des Rostkühlers (16), mit dem dessen Rekuperationsbereich beginnt, zur Horizontalen neigungsverstellbar ausgebildet ist.

3. Anlage nach den Ansprüchen 1 oder 2,
**dadurch gekennzeichnet, daß** im Ofenauslaufgehäuse (11) die Breite (23) des Kühlrostes im Abwurfbereich des Klinkers um ¹/₃ bis ½ kleiner ist als an den übrigen Längsabschnitten des Rostkühlers (16).

4. Anlage nach einem oder mehreren der Ansprüche 1 bis 3,
**dadurch gekennzeichnet, daß** das Ofenauslaufgehäuse (11) am Übergang (24) von dessen Abdeckung zur Deckenwandung des quer zum Drehofen (10) angeordneten Rostkühlergehäuses (16) so gestaltet bzw. so erweitert ist, daß es nicht zu einer Erhöhung der Gasgeschwindigkeit an diesem Gehäuseübergang (24) kommt.

5. Anlage nach einem oder mehreren der Ansprüche 1 bis 4,
**dadurch gekennzeichnet, daß** zur bestmöglichen Steuerung der Kühlluftzufuhr der Kühlrost in der Rekuperationszone aus einzeln belüfteten Rostreihen besteht.

## Claims

1. Installation for the heat treatment of raw materials in meal form, in particular for producing cement clinker from raw meal, comprising a rotary tubular kiln (10) and at least one preheater, through which the exit gas from the rotary tubular kiln can flow, having a calcining stage, which is connected upstream of the rotary tubular kiln and is supplied with hot air or tertiary air from the clinker cooler (16) and additional fuel, and having a clinker grate cooler (16), which is connected downstream of the rotary tubular kiln (10), and having a kiln outlet housing (11), which is arranged between the rotary kiln outlet end and the recuperation region of the grate cooler and from which cooler hot air is guided in part as secondary air into the sintering zone of the rotary tubular kiln and in part as tertiary air via a tertiary air line to the calcining stage, **characterized by** the combination of the following features:
- the grate cooler (16) is arranged with its clinker conveying direction (16a) transverse with respect to the rotary kiln longitudinal axis, in such a way that the grate-cooler conveying direction runs at an angle α of 70° to 150° with respect to the rotary kiln axis;
- the removal opening (20 or 21) for the cooler hot air as combustion air for the calcining stage [tertiary air (17)] is arranged in the side wall and/or top wall of the kiln outlet housing (11), on that side half of this kiln outlet housing (11), at a location which is adjacent to the pile of bulk material (13) forming therein depending on the direction of rotation of the rotary tubular kiln (10) and at which the beginning of the recuperation region of the grate area (15) of the grate cooler (16) is located.

2. Installation according to Claim 1, **characterized in that** the first cooling-grate longitudinal section (15) of the grate cooler (16), at which its recuperation region begins, is designed in such a manner that its inclination can be adjusted with respect to the horizontal.

3. Installation according to Claim 1 or 2, **characterized in that** in the kiln outlet housing (11) the width (23) of the cooling grate in the discharge region of the clinker is 1/3 to 1/2 less than at the other longitudinal sections of the grate cooler (16).

4. Installation according to one or more of Claims 1 to 3, **characterized in that** the kiln outlet housing (11), at the transition (24) from its cover to the covering wall of the grate-cooler housing (16) arranged transversely with respect to the rotary kiln (10), is designed or widened in such a way that there is no increase in the gas velocity at this transition (24) between the housings.

5. Installation according to one or more of Claims 1 to 4, **characterized in that** to optimally control the supply of cooling air, the cooling grate in the recuperation zone comprises individually ventilated grate rows.

## Revendications

1. Installation pour le traitement thermique de matières premières farineuses, en particulier pour la fabrication de clinker à partir de farine brute, constituée d'un four rotatif (10) et d'au moins un préchauffeur traversé par les fumées du four rotatif, comportant un étage de calcination raccordé en amont du four rotatif et alimenté en air chaud ou air tertiaire du refroidisseur (16) de clinker et en combustible d'appoint et un refroidisseur (16) de clinker à grille raccordé en aval du four rotatif (10) ainsi qu'une enveloppe de sortie (11) de four disposée entre l'extrémité de sortie de four et la zone de récupération du refroidisseur à grille, enveloppe, à partir de laquelle de l'air chaud du refroidisseur est guidé d'une part en tant qu'air secondaire dans la zone de frittage du four rotatif et d'autre part en tant qu'air tertiaire via une conduite d'air tertiaire vers l'étage de calcination, **caractérisée par** la combinaison des caractéristiques suivantes :
- le refroidisseur (16) à grille est disposé avec son sens de transport (16a) de clinker transversalement par rapport à l'axe longitudinal du four rotatif de sorte que le sens de transport du refroidisseur à grille s'étende sous un angle α de 70° à 150° par rapport à l'axe du four rotatif ;
- l'orifice de soutirage (20 ou selon le cas 21) de l'air chaud du refroidisseur en tant qu'air de combustion pour l'étage de calcination [air tertiaire (17)] est disposé dans la paroi latérale et/ou dans la paroi de couverture de l'enveloppe de sortie (11) de four sur cette moitié latérale de ladite enveloppe de sortie (11) de four à cet endroit, qui est voisin du rognon de matériau produit (13) se formant dans le four rotatif (10) selon le sens de rotation de celui-ci et se situe au départ de la zone de récupération de la surface de grille (15) du refroidisseur (16) à grille.

2. Installation selon la revendication 1, **caractérisée en ce que** la première section longitudinale (15) de la grille de récupération du refroidisseur (16) à grille, par laquelle sa zone de récupération débute, est conçue de façon que son inclinaison puisse être réglée par rapport à l'horizontale.

3. Installation selon les revendications 1 ou 2, **caractérisée en ce que** dans l'enveloppe de sortie (11) de four la largeur (23) de la grille de refroidissement dans la zone de déversement du clinker est plus petite d'1/3 à 1/2 que dans les sections longitudinales restantes du refroidisseur (16) à grille.

4. Installation selon l'une quelconque ou plusieurs des revendications 1 à 3, **caractérisée en ce que** l'enveloppe de sortie (11) du four est conformée à la transition (24) de son recouvrement à la paroi de couverture de l'enveloppe de refroidisseur (16) à grille disposée transversalement par rapport au four rotatif (10) ou selon le cas élargie de façon à ne pas entraîner une augmentation de la vitesse des gaz à cette transition (24) d'enveloppe.

5. Installation selon l'une quelconque ou plusieurs des revendications 1 à 4, **caractérisée en ce que** la grille de refroidissement est constituée dans la zone de récupération de rangées de grilles ventilées individuellement pour un réglage optimal de l'alimentation en air de refroidissement.
